# EUROPEAN PATENT APPLICATION

(11) **EP 3 264 810 A1**
(43) Date of publication of application: **03.01.2018**
(21) Application number: 16872218.9
(22) Date of filing: 30.09.2016
(51) Int. Cl.: H04W 8/08

(54) **PERCEPTION-FREE AUTHENTICATION METHOD AND SYSTEM, AND CONTROL METHOD AND SYSTEM BASED ON METHOD**

(30) Priority: 09.12.2015 CN 201510907355
(71) Applicant: Phicomm (Shanghai) Co., Ltd., Shanghai 201616 (CN)
(72) Inventor: YUE, Yi, Shanghai 201616 (CN)
(74) Representative: Sun, Yiming
(86) International application number: PCT/CN2016/101384
(87) International publication number: WO 2017/097023

(57) **Abstract**

The present invention provides a perception-free authentication method. The method includes the following steps: monitoring an authentication request forwarded by a member wireless access point from the terminal device when a cloud AC establishes a communication link with a plurality of wireless access points; and judging whether the authentication request passes authentication; if the authentication request passes authentication, feeding back a first response packet to the member wireless access point forwarding the authentication request to allow the terminal device to directly access the Internet; and otherwise, feeding back a second response packet to the member wireless access point forwarding the authentication request, wherein the second response packet includes an authentication record to be sent to a maser wireless access point, generated by sending the authentication request to the cloud AC via a member wireless access point and passing the cloud AC authentication. The present invention prevents acquisition of authentication information from a remote cloud AC, avoids a process of cross-public network authentication request, and improves authentication efficiency, such that perception-free authentication of a user in the roaming state has a good experience.

## Description

This application is based upon and claims priority of Chinese Patent Application No. 201510907355.3, filed before Chinese Patent Office on December 9, 2015 and entitled "PERCEPTION-FREE AUTHENTICATION METHOD AND SYSTEM, AND CONTROL METHOD AND SYSTEM BASED ON THE SAME", the entire contents of which are incorporated herein by reference.

### TECHNICAL FIELD

The present invention pertains to the technical field of wireless communications, relates to an authentication method and system and a control method and system, and in particularly, to a perception-free authentication method and system, and a control method and system based on the perception-free authentication method and system.

### BACKGROUND

With the increase of wireless coverage scenarios, more and more users are using such mobile terminal devices as mobile phones and accessing the Internet via WiFi. In the traditional wireless network management mode, an AC and APs are deployed locally, which is centralized management in the same local area network (LAN). In addition, all the data services of the APs are controlled and forwarded by the AC, and therefore when terminals are roaming, all the terminals are still authenticated by a Radius server in the same LAN. Each time when a user terminal roams and switches the AP thereof, the terminal user may initiate a Portal authentication request, and the user inputs a user password or is authenticated via a short packet, which severely affects user experience.

Conventional wireless roaming perception-free authentication is based on a management mode in the same LAN, and a MAC address and a user password of the terminal are bound in advance during an initial Portal authentication via the Radius server. When the user terminal needs a second Portal authentication due to roaming and AP switching, the APs, the AC and the Radius server all automatically participate the Portal authentication and complete the authentication, such that the user experiences perception-free authentication, that is, authentication-free roaming.

In a traditional WLAN system, the APs, the AC and the Radius server configured in the same LAN, and an authentication relationship of the terminal is pre-established, such that perception-free authentication during roaming is implemented and thus user experience is greatly improved. However, when a cloud AC deploys a WLAN, a serious performance issue is caused because in this case the AC is deployed on a cloud server and the cloud AC and the APs are not in the same LAN, and the cloud AC only manages the APs whereas the data services of the APs are not controlled and forwarded by the cloud AC. Further, the cloud AC further integrates the authentication service function, and is capable of implementing remote authentication across the Internet.

In the presence of the cloud AC, roaming perception-free authentication in the traditional mode is still used, and frequent authentication interactions between the APs and the cloud AC may severely affects users' roaming experience. This is because, in the traditional mode, the APs and the AC are configured in the same LAN, the authentication packet has a small forward delay; whereas in the cloud AC mode, cross-public transmission is carried out between the APs and the cloud AC, and when the network condition is poor, the forward delay of the authentication packet may be subjected to a fold increase and even packet loss. As a result, the user has a slow switching speed during roaming, or even fails to roam, which severely affects users' roaming experience.

Accordingly, it is an urgent technical problem for a person skilled in the art to provide a perception-free authentication method and system, a control method and system based on the perception-free authentication method and system, in order to solve the defects in the prior art that: frequent authentication communications are caused between APs and a cloud AC, and since the authentication packet has a very small forward delay, when cross-public network transmission is carried out between the APs and the cloud AC in a poor network condition, delay of the authentication packet may be subjected to a fold increase such that data loss is caused, and thus a user has a slow switching speed during roaming, and even user's roaming experience is greatly affected due to roaming failures.

### SUMMARY

In view of the above detects in the prior art, the present invention is intended to provide a perception-free authentication method and system, a control method and system based on the perception-free authentication method and system, in order to solve the problems in the prior art that: frequent authentication communications are caused between APs and a cloud AC, and since the authentication packet has a very small forward delay, when cross-public network transmission is carried out between the APs and the cloud AC in a poor network condition, delay of the authentication packet may be subjected to a fold increase such that data loss is caused, and thus a user has a slow switching speed during roaming, and even user's roaming experience is greatly affected due to roaming failures.

To achieve the above object and other related objects, the present invention provides a perception-free authentication method, applied to a wireless communication network including a terminal device, a plurality of wireless access points and a cloud AC, wherein the plurality of wireless access points form a communication group via the cloud AC, and the communication group includes a master wireless access point and a plurality of member wireless access points. The perception-free authentication method includes the following steps: monitoring an authentication request forwarded by a member wireless access point from the terminal device when the cloud AC establishes a communication link with the plurality of wireless access points; and judging whether the authentication request passes authentication; if the authentication request passes authentication, feeding back a first response packet to the member wireless access point forwarding the authentication request to allow the terminal device to directly access the Internet; and otherwise, feeding back a second response packet to the member wireless access point forwarding the authentication request, wherein the second response packet includes an authentication record to be sent to a maser wireless access point, generated by sending the authentication request to the cloud AC via a member wireless access point and passing the cloud AC authentication.

In an embodiment of the present invention, the judging whether an authentication record exists on the terminal device sending the authentication request in a pre-stored communication database, if so, the authentication request passes the authentication. The present invention further provides a control method based on the perception-free authentication method, applied to a wireless communication network including a terminal device, a plurality of wireless access points and a cloud AC, wherein the plurality of wireless access points form a communication group via the cloud AC, and the communication group includes a master wireless access point and a plurality of member wireless access points. The control method includes the following steps: setting a master message in a predetermined format according to authentication information of an assigned master wireless access point when a communication link is established with the plurality of wireless access points; sending the master message to the plurality of wireless access points so that the wireless access points judge whether the wireless access point is the master wireless access point or the member wireless access point; if the wireless access point is the master wireless access point, storing the master message to identify the master wireless access point; if the wireless access point is the master wireless access point, enabling the wireless access points to perform authentication according to the perception-free authentication system as defined in any one of claims 1-2; and when a terminal device forwards an authentication request via the member wireless access points to the master wireless access point and fails the authentication, receiving an authentication record sent by the member wireless access points and sending the authentication record to the master wireless access point for storage. In an embodiment of the present invention, the master message includes the authentication information of the assigned master wireless access point, and the authentication information of the assigned master wireless access point includes an IP address, a MAC address and a serial number.

In an embodiment of the present invention, the wireless access point judges whether the wireless access point itself is a master wireless access point or a member wireless access point according to whether a serial number thereof is consistent with the serial number in the master message, wherein if the serial numbers are consistent, the wireless access point is a master wireless access point, and otherwise, the wireless access point is a member wireless access point.

The present invention provides a perception-free authentication system, applied to a wireless communication network including a terminal device, a plurality of wireless access points and a cloud AC, wherein the plurality of wireless access points form a communication group via the cloud AC, the communication group includes a master wireless access point and a plurality of member wireless access points. The perception-free authentication system includes: a monitoring module, configured to monitor an authentication request forwarded by a member wireless access point from the terminal device when the cloud AC establishes a communication link with the plurality of wireless access points; and a first judging module, connected to the monitoring module, and configured to: judge whether the authentication request passes authentication; if the authentication request passes authentication, call a first communication module configured to feed back a first response packet to the member wireless access point forwarding the authentication request to allow the terminal device to directly access the Internet; and otherwise, call a second communication module configured to feed back a second response packet to the member wireless access point forwarding the authentication request, wherein the second response packet includes an authentication record to be sent to a maser wireless access point, generated by sending the authentication request to the cloud AC via a member wireless access point and passing the cloud AC authentication.

In an embodiment of the present invention, the judging whether the authentication request passes authentication is according to whether an authentication record exists in the terminal device sending the authentication request in a pre-stored communication database; wherein if the authentication record exists, the authentication request passes authentication, and otherwise, the authentication request fails the authentication.

The present invention further provides a control system based on the perception-free authentication method, applied to a wireless communication network including a terminal device, a plurality of wireless access points and a cloud AC, wherein the plurality of wireless access points form a communication group via the cloud AC, and the communication group includes a master wireless access point and a plurality of member wireless access points. The control method includes: a message compiling module, configured to compile a master message in a predetermined format according to the authentication information of an assigned master wireless access point when a communication link is established with the plurality of wireless access points; and a third communication module, connected to the message compiling module, and configured to: send the master message to the plurality of wireless access points so that the wireless access points judge whether the wireless access point is master wireless access point or the member wireless access point; if the wireless access point is the member wireless access point, store the master message to identify the master wireless access point; if the wireless access point is the master wireless access point, enable the wireless access points to perform authentication according to the perception-free authentication system as defined in any one of claims 6-7; and when a terminal device forwards an authentication request via the member wireless access points to the master wireless access point and fails the authentication, receive an authentication record sent by the member wireless access points and send the authentication record to the master wireless access point for storage. The present invention further provides a wireless access point, including the perception-free authentication system.

The present invention further provides a cloud AC, including the control system.

As described above, the perception-free authentication method and system, and the control method and system based on the perception-free authentication method and system according to the present invention achieve the following beneficial effects:

With the perception-free authentication method and system, and the control method and system based on the perception-free authentication method and system according to the present invention, a terminal device, when in a roaming state, does not need to acquire authentication information from a remote-end cloud AC, which avoids a process of cross-public network authentication request, and improves authentication efficiency, such that perception-free authentication of a user in the roaming state has a good experience.

### BRIEF DESCRIPTION OF THE DRAWINGS

FIG. 1 is a schematic flowchart of a perception-free authentication method according to an embodiment of the present invention;
FIG. 2 is a schematic structural diagram of principles of the perception-free authentication method according to an embodiment of the present invention;
FIG. 3 is a schematic structural diagram of principles of a wireless access point according to an embodiment of the present invention;
FIG. 4 is a schematic flowchart of a control method based on the perception-free authentication method according to an embodiment of the present invention;
FIG. 5 is a schematic structural diagram of principles of a control system based on a perception-free authentication system according to an embodiment of the present invention; and
FIG. 6 is a schematic structural diagram of principles of a cloud AC according to an embodiment of the present invention.

Reference numerals and denotations thereof:
- 1: Perception-free authentication system
- 11: Monitoring module
- 12: First judging module
- 13: First communication module
- 14: Second communication module
- 15: Second judging module
- 16: Deleting module
- 17: Subsequent processing module
- 18: Communication database
- 19: Clearing module
- 2: Wireless access point
- 3: Control system based on perception-free authentication system
- 31: Message compiling module
- 32: Third communication module
- 4: Cloud AC
- 33: Technical module
- S11-S20: Steps
- S21-S23: Steps

### DETAILED DESCRIPTION

The embodiments of the present invention are described hereinafter with reference to specific examples. A person skilled in the art would readily understand and know the other advantages and technical effects of the present invention based on the content disclosed in the specification of the present invention. The present invention may also be implemented or applied with reference to other different specific embodiments. Various details in the specification may also be based on different viewpoints and applications, and various modifications or variations may be made without departing from the spirit of the present invention. It should be noted that in cases of no conflict, the embodiments and features in the embodiments of the present invention may be combined together.

It should be noted that the drawings in the embodiments are merely intended to illustratively explain the basic concept of the present invention, and the drawings only illustrate components relevant to the present invention and are not drawn according to the quantity of components, the shapes and dimensions thereof in practice. The shape, quantity and scale of the components in practical implementation may be randomly altered, and the deployment of the components may be even more complicated.

### Embodiment 1

This embodiment provides a perception-free authentication method, applied to a wireless communication network including a terminal device, a plurality of wireless access points and a cloud AC, wherein the plurality of wireless access points form a communication group via the cloud AC, and the communication group includes a master wireless access point and a plurality of member wireless access points. The perception-free authentication method includes the following steps:
monitoring an authentication request forwarded by a member wireless access point from the terminal device when the cloud AC establishes a communication link with the plurality of wireless access points; and
judging whether the authentication request passes authentication; if the authentication request passes authentication, feeding back a first response packet to the member wireless access point forwarding the authentication request to allow the terminal device to directly access the Internet; and otherwise, feeding back a second response packet to the member wireless access point forwarding the authentication request, wherein the second response packet includes an authentication record to be sent to a maser wireless access point, generated by sending the authentication request to the cloud AC via a member wireless access point and passing the cloud AC authentication.

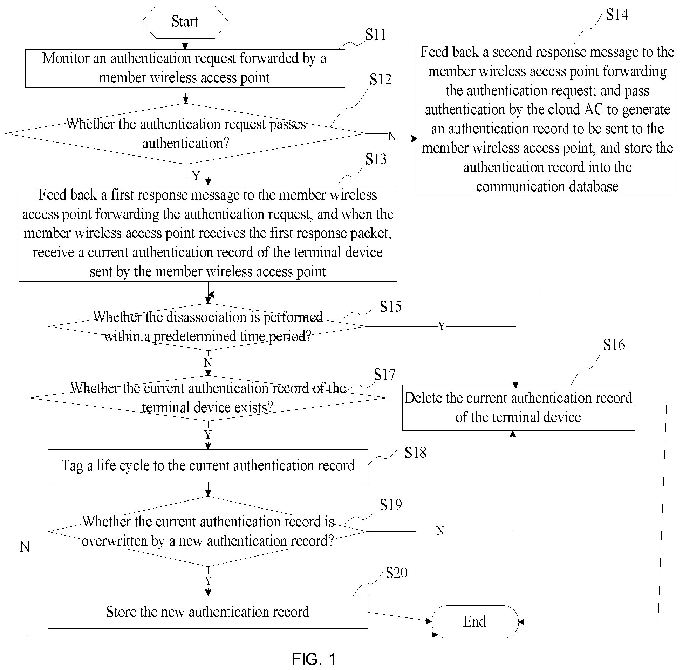

The perception-free authentication method according to this embodiment is described in detail with reference to the drawings. Referring to FIG. 1, a schematic flowchart of a perception-free authentication according to an embodiment of the present invention is given. The perception-free authentication method is applied to a wireless communication network including a terminal device, a plurality of wireless access points and a cloud AC. In practice, the terminal device includes a smart phone, a tablet computer, an iPad, a laptop computer and the like electronic device. The wireless access point is a router in this embodiment. In this embodiment, the cloud AC forms a communication group using a plurality of wireless access points in the same LAN, which is also referred to as a roaming group, and assigns a wireless access point in the communication group as a master wireless access point. Therefore, the communication group includes one master wireless access point and a plurality of member wireless access points. However, the number of wireless access points in the communication group shall be not greater. In this embodiment, it is defaulted that the communication group includes 32 wireless access points. It should be noted that the same LAN includes only one communication group, and one communication group includes only one master. However, one wireless access point may be included simultaneously in two communication groups. Communication between the master wireless access point and the member wireless access points is unicast communication by managing the LAN. As illustrated in FIG. 1, the perception-free authentication method specifically includes the following steps:
S11: The master wireless access point monitors an authentication request forwarded by a member wireless access point when the cloud AC establishes a communication link, i.e., a TCP link, with the plurality of wireless access points, wherein the authentication request is sent by the terminal device to one of the plurality of member wireless access points, and then forwarded by the member wireless access points to the master wireless access point. The authentication request in this embodiment is also referred to as a User Datagram Protocol (UDP) unicast packet. In this embodiment, the authentication request includes a source port number, a target port number, a length and a checksum.
S12: Upon receiving the authentication request, the master wireless access point receives judges whether the authentication request passes the authentication; if the authentication request passes the authentication, step S13 is performed; and otherwise, step S14 is performed. In this embodiment, whether the authentication request passes authentication is judged according to whether an authentication record exists in the terminal device sending the authentication request in a pre-stored communication database; wherein if the terminal device sending the authentication request has an authentication record, the terminal device sending the authentication request does not need a Portal authentication process and the authentication request passes authentication, and otherwise, the authentication request fails the authentication and the terminal device sending the authentication request needs a Portal authentication process. S13: The master wireless access point feeds back a first response packet to the member wireless access point forwarding the authentication request to allow the terminal device to directly access the Internet; and when the member wireless access point receives the first response packet, the master wireless access point receives a current authentication record of the terminal device sent by the member wireless access point. For example, the master wireless access point finds out that an STA 1 (a terminal device) has an authentication record in the communication database, for example, the STA 1 (the terminal device) has an existing authentication record <MAC address, AP 1>, the current authentication record of the terminal device is <MAC address, AP 2>, the authentication record indicates that the STA 1 forwards the authentication request via the member wireless access point, and the authentication request is stored at the master wireless access point. Therefore, the master wireless access point overwrites the existing authentication record of the terminal device with the current authentication record of the terminal device, that is, overwriting <MAC address, AP 1> with <MAC address, AP 2>.
S14: The master wireless access point feeds back a second response packet to the member wireless access point forwarding the authentication request; wherein the second response packet includes enabling the member wireless access point to send the authentication request to the cloud AC such that the member wireless access point is successfully authenticated by the cloud AC and an authentication record to be sent to the member wireless access point is generated, and the master wireless access point stores the authentication record into the communication database.
S15: When the terminal device needs to be disassociated from the connected member wireless access point, whether the disassociation is performed within a predetermined time period is judged; if the disassociation is performed within the predetermined time period, step S16 is performed, that is, the master wireless access point deletes the current authentication record of the terminal device; and otherwise, step S17 is performed.
S17: The master wireless access point judges whether the current authentication record of the terminal device exists; if the current authentication record of the terminal device exists, the process is terminated; and otherwise, step S18 is performed, that is, a life cycle is tagged to the current authentication record, and then step S19 is performed.
S19: Before the life cycle expires, whether the current authentication record is overwritten by a new authentication record is judged; if the current authentication record is overwritten by a new authentication record, step 20 is performed and the new authentication record is stored; and otherwise, the process returns to step S16, that is, the current authentication record of the terminal device is deleted. In this embodiment, the life cycle is 10 minutes.

The perception-free authentication method according to this embodiment further includes periodically clearing the communication database within a predetermined clear cycle to avoid permanent residence of invalid records in the communication database due to exceptions. In this embodiment, the predetermined clear cycle is 24 hours.

With the perception-free authentication method according to this embodiment, a terminal device, when in a roaming state, does not need to acquire authentication information from a remote-end cloud AC, which avoids a process of cross-public network authentication request, and improves authentication efficiency, such that perception-free authentication of a user in a roaming state has a good experience.

### Embodiment 2

This embodiment provides a perception-free authentication system, applied to a wireless communication network including a terminal device, a plurality of wireless access points and a cloud AC, wherein the plurality of wireless access points form a communication group via the cloud AC, and the communication group includes a master wireless access point and a plurality of member wireless access points. The perception-free authentication system includes:
a monitoring module, configured to monitor an authentication request forwarded by a member wireless access point from the terminal device when the cloud AC establishes a communication link with the plurality of wireless access points; and
a first judging module, connected to the monitoring module, and configured to judge whether the authentication request passes authentication; if the authentication request passes authentication, call a first communication module configured to feed back a first response packet to the member wireless access point forwarding the authentication request to allow the terminal device to directly access the Internet; and otherwise, call a second communication module configured to feed back a second response packet to the member wireless access point forwarding the authentication request, wherein the second response packet includes an authentication record to be sent to a maser wireless access point, generated by sending the authentication request to the cloud AC via a member wireless access point and passing the cloud AC authentication; and when a terminal device forwards an authentication request via the member wireless access points to the master wireless access point and fails the authentication, receive an authentication record sent by the member wireless access points and send the authentication record to the master wireless access point for storage.

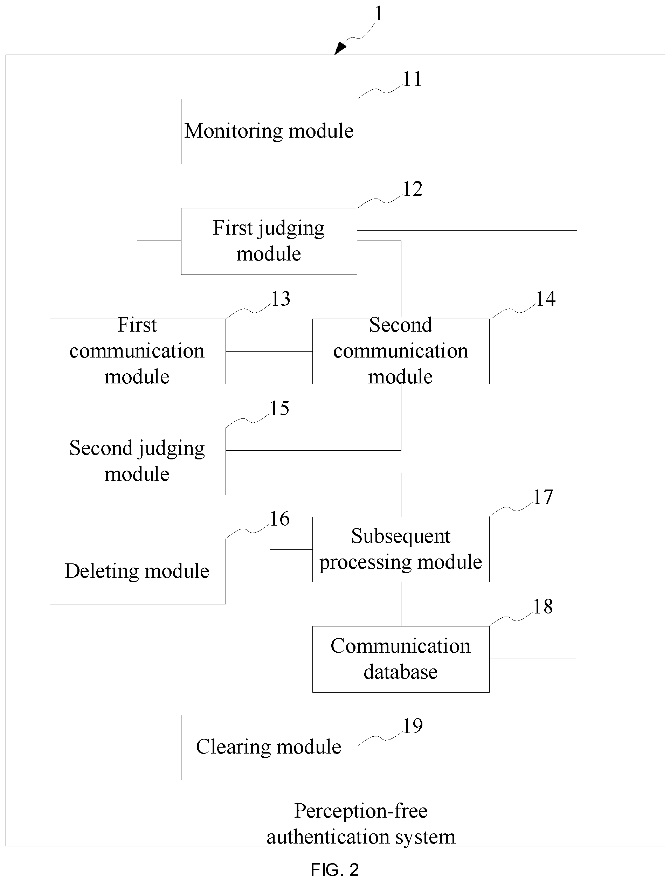

The perception-free authentication method according to this embodiment is described in detail with reference to the drawings. Referring to FIG. 2, a schematic diagram of principles of a perception-free authentication system 1 according to an embodiment of the present invention is given. The perception-free authentication system 1 is applied to a wireless communication network including a terminal device, a plurality of wireless access points and a cloud AC. In practice, the terminal device includes a smart phone, a tablet computer, an iPad, a laptop computer and the like electronic device. The wireless access point is a router in this embodiment. In this embodiment, the cloud AC forms a communication group using a plurality of wireless access points in the same LAN, which is also referred to as a roaming group, and assigns a wireless access points in the communication group as a master wireless access point. Therefore, the communication group includes one master wireless access point and a plurality of member wireless access point. However, the number of wireless access points in the communication group shall be not greater. In this embodiment, it is defaulted that the communication group includes 32 wireless access points. It should be noted that the same LAN includes only one communication group, and one communication group includes only one master. However, one wireless access point may be included simultaneously in two communication groups. Communication between the master wireless access point and the member wireless access points is unicast communication by managing the LAN. As illustrated in FIG. 2, the perception-free authentication system specifically includes a monitoring module 11, a first judging module 12, a first communication module 13, a second communication module 14, a second judging module 15, a deleting module 16, a subsequent processing module 17, a communication database 18 and a clearing module 19.

The monitoring module 11 is configured to monitor an authentication request forwarded by a member wireless access point when the cloud AC establishes a communication link, i.e., a TCP link, with the plurality of wireless access points, wherein the authentication request is sent by the terminal device to one of the plurality of member wireless access points, and then forwarded by the member wireless access points to the master wireless access point. The authentication request in this embodiment is also referred to as a User Datagram Protocol (UDP) unicast packet. In this embodiment, the authentication request includes a source port number, a destination port number, a length and a checksum.

The first judging module 12 is connected to the monitoring module 11, and is configured to upon receiving the authentication request, judge whether the authentication request passes then authentication; if the authentication request passes authentication, call the first communication module 13; and otherwise, call the second communication module 14. In this embodiment, the first judging module 12 is connected to the monitoring module 11, and is configured to judge whether the authentication request passes the authentication according to whether an authentication record exists on the terminal device sending the authentication request in a pre-stored communication database; if so, the terminal device sending the authentication request does not need a Portal authentication process and the authentication request passes the authentication, and otherwise, the authentication request fails the authentication and the terminal device sending the authentication request needs a Portal authentication process.

The first communication module 13 is connected to the first judging module 12, and is configured to feed back a first response packet to the member wireless access point forwarding the authentication request to allow the terminal device to directly access the Internet; and when the member wireless access point receives the first response packet, the first communication unit 13 is further configured to receive a current authentication record of the terminal device sent by the member wireless access point. For example, the master wireless access point finds out that an STA 1 (a terminal device) has an authentication record in the communication database, for example, the STA 1 (the terminal device) has an existing authentication record <MAC address, AP 1>, the current authentication record of the terminal device is <MAC address, AP 2>, the authentication record indicates that the STA 1 forwards the authentication request via the member wireless access point, and the authentication request is stored at the master wireless access point. Therefore, the master wireless access point overwrites the existing authentication record of the terminal device with the current authentication record of the terminal device, that is, overwriting <MAC address, AP 1> with <MAC address, AP 2>.

The second communication module 14 is connected to the first judging module and the first communication module 13, and is configured to feed back a second response packet to the member wireless access point forwarding the authentication request, wherein the second response packet includes an authentication record to be sent to a maser wireless access point, generated by sending the authentication request to the cloud AC via a member wireless access point and passing the cloud AC authentication; and the second communication module 14 is further configured to store the authentication record into the communication database.

The second judging module 15 is connected to the first communication module 13 and the second communication module 14, and is configured to when the terminal device needs to be disassociated from the connected member wireless access point, judge whether the disassociation is performed within a predetermined time period; if the disassociation is performed within the predetermined time period, call the deleting module 16 configured to delete the current authentication record of the terminal device; and otherwise, call the subsequent processing module. The subsequent processing module 17 is configured to judge whether the current authentication record of the terminal device exists; if the current authentication record of the terminal device exists, terminate the process; and otherwise, tag a life cycle to the current authentication record, and judge whether the current authentication record is overwritten by a new authentication request when the life cycle expires. If the current authentication record is overwritten by a new authentication request, the subsequent processing module 17 calls the communicate database 18 (connected to the first judging module 12) to store the new authentication record; and otherwise, the subsequent processing module 17 calls the deleting module 16 to delete the current authentication record of the terminal device. In this embodiment, the life cycle is 10 minutes.

The perception-free authentication system 1 further includes a clearing module connected to the subsequent processing module 17, wherein the clearing module 19 is configured to periodically clear the communication database within a predetermined clear cycle to avoid permanent residence of invalid records in the communication database due to exceptions. In this embodiment, the predetermined clear cycle is 24 hours.

With the perception-free authentication system according to this embodiment, a terminal device, when in a roaming state, does not need to acquire authentication information from a remote-end cloud AC, which avoids a process of cross-public network authentication request, and improves authentication efficiency, such that perception-free authentication of a user in a roaming state has a good experience.

### Embodiment 3

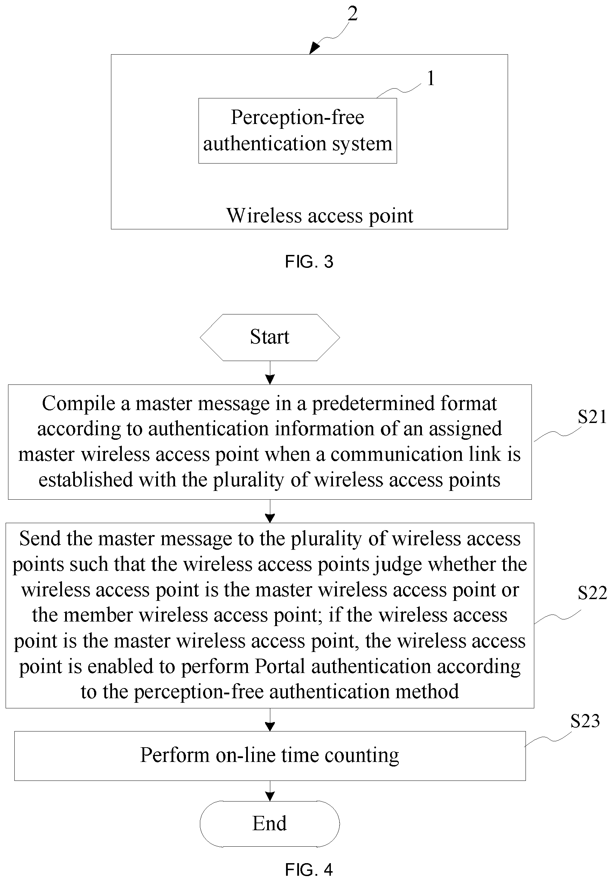

This embodiment provides a wireless access point 2. Referring to FIG. 3, a schematic structural diagram of principles of a wireless access point according to an embodiment of the present invention is given. As illustrated in FIG. 3, the wireless access point 2 includes the perception-free authentication system as described in Embodiment 2. In this embodiment, the wireless access point 2 includes a processor and a memory, wherein the memory is configured to implement all the functions, except the function of storing authentication records, of the perception-free authentication system, and the memory is configured to implement the function of storing authentication records of a communication database.

With the wireless access point according to this embodiment, a terminal device, when in a roaming state, does not need to acquire authentication information from a remote-end cloud AC, which avoids a process of cross-public network authentication request, and improves authentication efficiency, such that perception-free authentication of a user in a roaming state has a good experience.

### Embodiment 4

This embodiment provides a control method based on the perception-free authentication system, applied to a wireless communication network including a terminal device, a plurality of wireless access points and a cloud AC, wherein the plurality of wireless access points form a communication group via the cloud AC, and the communication group includes a master wireless access point and a plurality of member wireless access points. The control method includes the following steps:
compiling a master message in a predetermined format according to authentication information of an assigned master wireless access point when a communication link is established with the plurality of wireless access points; and sending the master message to the plurality of wireless access points so that the wireless access points judge whether the wireless access point is the master wireless access point or the member wireless access point; if the wireless access point is the master wireless access point, the wireless access point is enabled to perform authentication according to the perception-free authentication method.

The control method based on the perception-free authentication method according to this embodiment is described with reference to the drawings. Referring to FIG. 4, a schematic flowchart of a control method based on the perception-free authentication according to an embodiment is given. The control method according to this embodiment is applied to a wireless communication network including a terminal device, a plurality of wireless access points and a cloud AC. In practice, the terminal device includes a smart phone, a tablet computer, an iPad, a laptop computer and the like electronic device. The wireless access point is a router in this embodiment. In this embodiment, the cloud AC forms a communication group using a plurality of wireless access points in the same LAN, which is also referred to as a roaming group, and assigns a wireless access point in the communication group as a master wireless access point. Therefore, the communication group includes one master wireless access point and a plurality of member wireless access point. However, the number of wireless access points in the communication group shall be not greater. In this embodiment, it is defaulted that the communication group includes 32 wireless access points. It should be noted that the same LAN includes only one communication group, and one communication group includes only one master. However, one wireless access point may be included simultaneously in two communication groups. Communication between the master wireless access point and the member wireless access points is unicast communication by managing the LAN. As illustrated in FIG. 4, the control method specifically includes the following steps:
S21: A master message is compiled in a predetermined format according to authentication information of an assigned master wireless access point when a communication link is established with the plurality of wireless access points. The predetermined format is authentication information of an assigned master wireless access point + a target address, that is, an IP address of each member wireless access point. The authentication information of the assigned master wireless access point includes an IP address, a MAC address and a serial number.

The master message is sent to the plurality of wireless access points so that the wireless access point judges whether the wireless access point is the master wireless access point or the member wireless access point; if the wireless access point is the master wireless access point, the wireless access point is enabled to perform Portal authentication according to the perception-free authentication method as described in Embodiment 1. In this embodiment, the wireless access point judges whether the wireless access point itself is a master wireless access point or a member wireless access point according to whether a serial number thereof are consistent with the serial number in the master message, wherein if the serial numbers are consistent, the wireless access point is a master wireless access point, and otherwise, the wireless access point is a member wireless access point; and when a terminal device forwards an authentication request via the member wireless access points to the master wireless access point and fails the authentication, receives an authentication record sent by the member wireless access points and sends the authentication record to the master wireless access point for storage.

S23: Counting the online time is performed. When a station (STA) sends an STA authentication request to the master wireless access point via a member wireless access point (AP), and is successfully identified and authenticated according to local data, authentication of the STA is successful and the STA is allowed to access the AP (in this case, the STA is capable of accessing the Internet). Subsequently, the STA acquires the online time from the cloud AC via a Client in message, and sends a Client_out message to the cloud AC for synchronous time counting when exiting the AP.

With the control method based on the perception-free authentication method according to this embodiment, a terminal device, when in a roaming state, does not need to acquire authentication information from a remote-end cloud AC, which avoids a process of cross-public network authentication request, and improves authentication efficiency, such that perception-free authentication of a user in a roaming state has a good experience.

### Embodiment 5

This embodiment provides a control system based on the perception-free authentication system, applied to a wireless communication network including a terminal device, a plurality of wireless access points and a cloud AC, wherein the plurality of wireless access points form a communication group via the cloud AC, and the communication group includes a master wireless access point and a plurality of member wireless access points. The control system includes:
a message compiling module, configured to compile a master message in a predetermined format according to authentication information of an assigned master wireless access point when a communication link is established with the plurality of wireless access points; and
a third communication module, connected to the message compiling module, and configured to send the master message to the plurality of wireless access points so that the wireless access point judges whether the wireless access point is the master wireless access point or the member wireless access point; if the wireless access point is the master wireless access point, enable the wireless access points to perform authentication according to the perception-free authentication system.

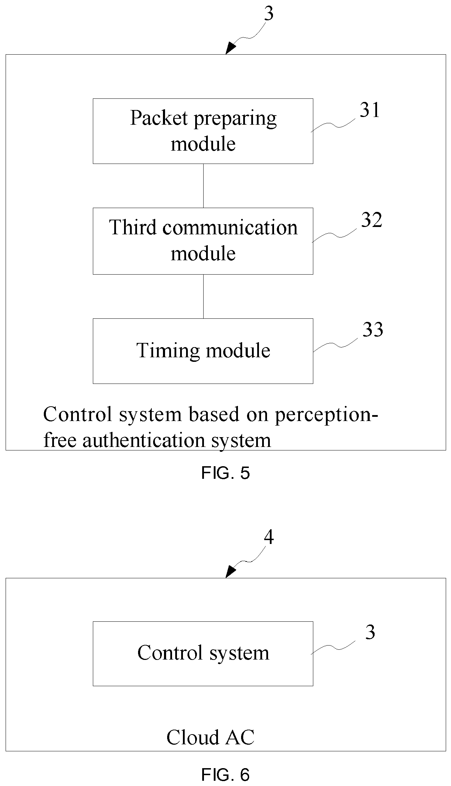

The control system based on the perception-free authentication system is described with reference to the drawings. Referring to FIG. 5, a schematic structural diagram of principles of a control system based on a perception-free authentication system according to an embodiment of the present invention is given. The control system 3 according to this embodiment is applied to a wireless communication network including a terminal device, a plurality of wireless access points and a cloud AC. In practice, the terminal device includes a smart phone, a tablet computer, an iPad, a laptop computer and the like electronic device. The wireless access point is a router in this embodiment. In this embodiment, the cloud AC forms a communication group using a plurality of wireless access points in the same LAN, which is also referred to as a roaming group, and assigns a wireless access point in the communication group as a master wireless access point. Therefore, the communication group includes one master wireless access point and a plurality of member wireless access point. However, the number of wireless access points in the communication group shall be not greater. In this embodiment, it is defaulted that the communication group includes 32 wireless access points. It should be noted that the same LAN includes only one communication group, and one communication group includes only one master. However, one wireless access point may be included simultaneously in two communication groups. Communication between the master wireless access point and the member wireless access points is unicast communication by managing the LAN. As illustrated in FIG. 5, the control system specifically includes: a message compiling module 31, a third communication module 32 and a timing module 33.

The message compiling module 31 is configured to compile a master message in a predetermined format according to authentication information of an assigned master wireless access point when a communication link is established with the plurality of wireless access points. The predetermined format is authentication information of an assigned master wireless access point + a target address, that is, an IP address of each member wireless access point. The authentication information of the assigned master wireless access point includes an IP address, a MAC address and a serial number.

The third communication module 31 is connected to the message compiling module 31, and is configured to send the master message to the plurality of wireless access points so that the wireless access point judges whether the wireless access point is the master wireless access point or the member wireless access point; if the wireless access point is the master wireless access point, enable the wireless access points to perform authentication according to the perception-free authentication method as described in Embodiment 1. In this embodiment, the wireless access point judges whether the wireless access point itself is a master wireless access point or a member wireless access point according to whether a serial number thereof are consistent with the serial number in the master message, wherein if the serial numbers are consistent, the wireless access point is a master wireless access point, and otherwise, the wireless access point is a member wireless access point; and when a terminal device forwards an authentication request via the member wireless access points to the master wireless access point and fails the authentication, receives an authentication record sent by the member wireless access points and sends the authentication record to the master wireless access point for storage. The timing module 33 is connected to the third communication module 32 and is configured to count the online time. When a station (STA) sends an STA authentication request to the master wireless access point via a member wireless access point (AP), and is successfully identified and authenticated according to local data, authentication of the STA is successful and the STA is allowed to access the AP (in this case, the STA is capable of accessing the Internet). Subsequently, the STA acquires an internet surfing duration from the cloud AC via a Client_in message, and sends a Client_out message to the cloud AC for synchronous time counting when exiting the AP. With the control system based on the perception-free authentication system according to this embodiment, a terminal device, when in a roaming state, does not need to acquire authentication information from a remote-end cloud AC, which avoids a process of cross-public network authentication request, and improves authentication efficiency, such that perception-free authentication of a user in a roaming state has a good experience.

### Embodiment 6

This embodiment provides a cloud AC 4. Referring to FIG. 6, a schematic structural diagram of principles of a cloud AC according to an embodiment of the present invention is given. As illustrated in FIG. 6, the cloud AC 6 includes the control system 3 as described in Embodiment 5. In this embodiment, the cloud AC 4 includes a processor, wherein the processor is configured to implement all the functions of the control system as described in Embodiment 5.

In conclusion, with the perception-free authentication method and system, and the control method and system based on the perception-free authentication method and system according to the present invention, a terminal device, when in a roaming state, does not need to acquire authentication information from a remote-end cloud AC, which avoids a process of cross-public network authentication request, and improves authentication efficiency, such that perception-free authentication of a user in the roaming state has a good experience. Therefore, the present invention effectively overcomes various defects in the prior art and has high industrial value.

The above embodiments are merely used for exemplarily illustrate the principles, functions and effects of the present invention, but are not intended to limiting the present invention. Any person skilled in the art would make polishments or modifications to the above embodiments without departing from the spirit and category of the present invention. Therefore, any equivalent polishments or modifications derived a person having common knowledge in the art without departing from the spirit and inventive concept of the present invention shall all be covered within the scope defined by the claims of the present invention.

## Claims

1. A perception-free authentication method, applied to a wireless communication network comprising a terminal device, a plurality of wireless access points and a cloud AC, wherein the plurality of wireless access points form a communication group via the cloud AC, and the communication group comprises a master wireless access point and a plurality of member wireless access points; the perception-free authentication method comprising the following steps:
monitoring an authentication request forwarded by a member wireless access point from the terminal device when the cloud AC establishes a communication link with the plurality of wireless access points; and
judging whether the authentication request passes authentication; if the authentication request passes authentication, feeding back a first response packet to the member wireless access point forwarding the authentication request to allow the terminal device to directly access the Internet; and otherwise, feeding back a second response packet to the member wireless access point forwarding the authentication request, wherein the second response packet comprises an authentication record to be sent to a maser wireless access point, generated by sending the authentication request to the cloud AC via a member wireless access point and passing the cloud AC authentication.

2. The perception-free authentication method according to claim 1, wherein the judging whether an authentication record exists on the terminal device sending the authentication request in a pre-stored communication database, if so, the authentication request passes the authentication; otherwise, the authentication request fails the authentication.

3. A control method based on the perception-free authentication method as defined in any of claims 1 to 2, applied to a wireless communication network comprising a terminal device, a plurality of wireless access points and a cloud AC, wherein the plurality of wireless access points form a communication group via the cloud AC, and the communication group comprises a master wireless access point and a plurality of member wireless access points; the control method comprising the following steps:
setting a master message in a predetermined format according to authentication information of an assigned master wireless access point when a communication link is established with the plurality of wireless access points;
sending the master message to the plurality of wireless access points so that the wireless access point judges whether the wireless access point is the master wireless access point or the member wireless access point; if the wireless access point is the member wireless access point, storing the master message to identify the master wireless access point; if the wireless access point is the master wireless access point, enabling the wireless access points to perform authentication according to the perception-free authentication system as defined in any one of claims 1-2; and when a terminal device forwards an authentication request via the member wireless access points to the master wireless access point and fails the authentication, receiving an authentication record sent by the member wireless access points and sending the authentication record to the master wireless access point for storage.

4. The control method according to claim 3, wherein the master message comprises the authentication information of the assigned master wireless access point, and the authentication information of the assigned master wireless access point comprises an IP address, a MAC address and a serial number.

5. The control method according to claim 4, wherein the wireless access point judges whether the wireless access point itself is a master wireless access point or a member wireless access point according to whether a serial number thereof are consistent with the serial number in the master message, wherein if the serial numbers are consistent, the wireless access point is a master wireless access point, and otherwise, the wireless access point is a member wireless access point.

6. A perception-free authentication system, applied to a wireless communication network comprising a terminal device, a plurality of wireless access points and a cloud AC, wherein the plurality of wireless access points form a communication group via the cloud AC, and the communication group comprises a master wireless access point and a plurality of member wireless access points; the perception-free authentication system comprising:
a monitoring module, configured to monitor an authentication request forwarded by a member wireless access point from the terminal device when the cloud AC establishes a communication link with the plurality of wireless access points; and
a first judging module, connected to the monitoring module, and configured to judge whether the authentication request passes authentication; if the authentication request passes authentication, call a first communication module configured to feed back a first response packet to the member wireless access point forwarding the authentication request to allow the terminal device to directly access the Internet; and otherwise, call a second communication module configured to feed back a second response packet to the member wireless access point forwarding the authentication request, wherein the second response packet comprises an authentication record to be sent to a maser wireless access point, generated by sending the authentication request to the cloud AC via a member wireless access point and passing the cloud AC authentication.

7. The perception-free authentication system according to claim 6, wherein judging whether the authentication request passes authentication is according to whether an authentication record exists in the terminal device sending the authentication request in a pre-stored communication database; wherein if the authentication record exists, the authentication request passes the authentication, and otherwise, the authentication request fails the authentication.

8. A control system based on the perception-free authentication system as defined in any one of claims 6 to 7, applied to a wireless communication network comprising a terminal device, a plurality of wireless access points and a cloud AC, wherein the plurality of wireless access points form a communication group via the cloud AC, and the communication group comprises a master wireless access point and a plurality of member wireless access points; the control system comprising:
a message compiling module, configured to compile a master message in a predetermined format according to the authentication information of an assigned master wireless access point when a communication link is established with the plurality of wireless access points; and
a third communication module, connected to the message compiling module, and configured to send the master message to the plurality of wireless access points so that the wireless access point judges whether the wireless access point is the master wireless access point or the member wireless access point; if the wireless access point is the member wireless access point, store the master message to identify the master wireless access point; if the wireless access point is the master wireless access point, enable the wireless access points to perform authentication according to the perception-free authentication system as defined in any one of claims 6-7; and when a terminal device forwards an authentication request via the member wireless access points to the master wireless access point and does not pass the authentication, receive an authentication record sent by the member wireless access points and send the authentication record to the master wireless access point for storage.

9. A wireless access point, comprising: the perception-free authentication system as defined in any one of claims 6 to 7.

10. A cloud AC, comprising the control system as defined in claim 8.
